# EUROPÄISCHE PATENTSCHRIFT

(11) **EP 3 978 156 B1**
(45) Veröffentlichungstag und Bekanntmachung des Hinweises auf die Patenterteilung: **15.04.2026**
(21) Anmeldenummer: 21200497.2
(22) Anmeldetag: 01.10.2021
(51) Int. Cl.: F28D 9/00, F24D 19/08, F28F 9/02, B01D 19/00, B21D 53/04, F16K 24/04, F24D 3/18, F25B 39/02

(54) **PLATTENWÄRMEÜBERTRAGER UND HEIZUNGS- ODER KÜHLANLAGE**
PLATE HEAT EXCHANGER AND HEATING OR COOLING SYSTEM
ÉCHANGEUR DE CHALEUR À PLAQUES ET SYSTÈME DE CHAUFFAGE OU DE REFROIDISSEMENT

(30) Priorität: 02.10.2020 DE 102020125794
(43) Veröffentlichungstag der Anmeldung: 06.04.2022
(73) Patentinhaber: Rehberg, Michael, 15738 Zeuthen (DE)
(72) Erfinder: Rehberg, Michael, 15738 Zeuthen (DE); Rehberg, Freya, 15738 Zeuthen (DE)
(74) Vertreter: Adares PartGmbB

(56) Entgegenhaltungen:
- WO-A1-2014/178472
- WO-A1-2018/187450
- KR-A- 20160 012 404
- KR-A- 20190 143 091
- US-B1- 7 337 836

## Beschreibung

Die Erfindung betrifft einen Plattenwärmeübertrager und eine Heizungs- oder Kühlanlage mit einer Wärmepumpe oder Kälteanlage, welche einen derartigen Plattenwärmeübertrager aufweist.

Aufgrund der fehlenden Nachhaltigkeit sollen in Zukunft Wärmepumpen oder Kälteanlagen mit klimaschädlichen Kältemitteln nicht mehr eingesetzt werden. Alle bekannten alternativen Kältemittel haben jedoch erhebliche Nachteile: Das Kältemittel Wasser benötigt einen sehr geringen Druck und eignet sich wegen der großen Volumina nur für sehr große Leistungen. Ammoniak ist giftig und entwickelt bereits bei kleinsten Konzentrationen einen scharfen Geruch.

Deshalb fällt häufig die Wahl auf brennbare oder giftige Kältemittel, deren Einsatz dann jedoch durch strikte Mengenbegrenzungen und Sicherheitsvorkehrungen reglementiert ist. Eine wichtige Sicherheitsbestimmung ist, dass brennbare Kältemittel nur in begrenzter Menge in Wohngebäude gelangen dürfen. Deshalb erfolgt die Aufstellung der Wärmepumpe oder Kälteanlage vorzugsweise im Außenbereich des Gebäudes. Lediglich das mittels der Wärmepumpe oder Kälteanlage aufgewärmte Heizungswasser wird über Rohrleitungen in das Gebäude geleitet und zu den dort angeordneten Heizgeräten transportiert.

Darüber hinaus muss in der Wärmepumpe oder Kälteanlage eine Medientrennung zwischen Kältekreislauf und Heizungswasser mittels eines Wärmeübertragers erfolgen. Wird nun der Wärmeübertrager selbst innen undicht, dann kann es doch geschehen, dass Kältemittel in den Kühlkreis oder Heizungskreis gelangt und somit mittels des Heizungswassers durch die Rohleitungen in das Gebäude transportiert wird. Über Entlüftungsventile beispielsweise an den Kühlgeräten oder Heizgeräten kann das Kältemittel schließlich in die Wohnräume gelangen. Um eine derartige Durchmischung von Kältemittel und Kühlwasser, Heizungswasser oder Trinkwasser zu vermeiden, werden bei Einsatz brennbarer Kältemittel häufig doppelwandige Wärmeübertrager verwendet.

Ein Plattenwärmeübertrager ist üblicherweise aus mehreren plattenförmigen Wärmeübertragern gebildet, den Wärmeübertragungsplatten, welche mit einem wellenförmigen Muster, beispielsweise einem Fischgrätenmuster mit wellenförmiger Profilierung geformt sind. Diese Wärmeübertragungsplatten sind wechselweise um 180° zueinander gedreht aufeinandergestapelt und an Kontaktpunkten miteinander verlötet, sodass sich zwischen ihnen Strömungskanäle für zwei Wärmeaustauschmedien bilden. Bei Betrieb des Plattenwärmeübertragers strömen an gegenüberliegenden Flächen jeder der Wärmeübertragungsplatten die beiden Wärmeaustauschmedien, beispielsweise das Heizungswasser und das Kältemittel, gegenläufig oder gleichläufig entlang. Dabei wird durch die Wärmeübertragerplatte hindurch Wärme zwischen den beiden Wärmeaustauschmedien übertragen. Eine Wärmeübertragerplatte kann beispielsweise eine Stärke von 0,4 mm aufweisen. Ein Plattenwärmeübertrager gemäß dem Oberbegriff des Anspruchs 1 ist aus der KR 2016 0012404 bekannt.

Bei doppelwandigen Plattenwärmeübertragern werden statt jeweils einer 0,4 mm starken Wärmeübertragerplatte zwei Wärmeübertragerplatten aus 0,2 mm starkem Blech verwendet, die nur an wenigen Stellen miteinander verbunden sind. Die verbundenen Bleche werden als Doppelplatten (Kassetten) in gleicher Weise miteinander zu dem Plattenstapel verlötet. Lecks sollen nach außen durch den Zwischenraum in der Kassette sichtbar werden. Diese Bauweise birgt jedoch gleich mehrere Schwachstellen: Beim Löten der Wärmeübertragerplatten mit Kupfer ist es nicht einfach, den Spalt zwischen den zwei Blechen jeder Kassette nicht zu verlöten. Oft werden die Bleche ungewollt miteinander verlötet, ohne dass die verlöteten Stellen erkannt werden. Durch den Innendruck deformieren sich die Wärmeübertragerplatten der Kassetten unterschiedlich, was zu Zwischenräumen in den Kassetten führen und den Wärmedurchgang verschlechtern kann. Durch die innendruckbedingte Verformung sind die versehentlich verlöteten Bereiche steifer als der Rest. Die Bereiche neben den Lötstellen werden stark verformt und die Gefahr der Rissbildung steigt. Schließlich können Defekte an doppelwandigen Wärmeübertragerplatten nur durch Beobachtung erkannt werden.

Es ist Aufgabe der Erfindung, eine Heizungs- oder Kühlanlage mit einem Plattenwärmeübertrager bereitzustellen, welcher nicht die oben genannten Nachteile aufweist, verlässlich und sicher zu bedienen ist und mit wenig zusätzlichem Aufwand herstellbar und installierbar ist.

Die Aufgabe wird gemäß der Erfindung durch einen Plattenwärmeübertrager mit den Merkmalen des Anspruchs 1 und durch eine Heizungs- oder Kühlanlage mit den Merkmalen des Anspruchs 6, sowie ein Verfahren mit den Merkmalen des Anspruchs 10 gelöst. Vorteilhafte Weiterbildungen der Erfindung sind in den Unteransprüchen aufgeführt.

Die Erfindung beruht auf der Überlegung, dass ein Leck innerhalb des Plattenwärmeübertragers dazu führt, dass sich die Flüssigkeit und das Gas vermischen, bzw. dass das Gas in die Flüssigkeit gelangt und in Form von Gasblasen mitgerissen wird. Mittels des Gasabscheiders wird das Gas aus der Flüssigkeit getrennt, so dass es nicht mehr in den Flüssigkeitskreislauf gelangen kann. Bei der Flüssigkeit handelt es sich insbesondere um Wasser, nämlich um Heizungswasser, welches für ein Heizungssystem innerhalb eines Gebäudes, insbesondere innerhalb von Wohnräumen, eingesetzt wird. Alternativ können jedoch auch andere Flüssigkeiten oder Gemische aus ihnen mit Wasser eingesetzt werden. Das als Kältemittel dienende Gas, beispielsweise Propan, ist in der Regel brennbar und darf daher nicht in die Wohnräume gelangen.

Der Plattenstapel ist aus aufeinander gestapelten Wärmeübertragungsplatten gebildet, welche derart profiliert und an Berührungspunkten der Profilierung miteinander verbunden, insbesondere verlötet sind, dass zwischen ihnen erste Strömungskanäle für die verdampfende oder kondensierende Flüssigkeit und zweite Strömungskanäle für das Gas ausgebildet sind. Die Flüssigkeit tritt durch eine Flüssigkeitseintrittsöffnung in den Plattenstapel und verlässt ihn durch eine Austrittsöffnung. An dieser Austrittsöffnung ist erfindungsgemäß ein Gasabscheider angeordnet, welcher ausgebildet ist, das von der Flüssigkeit mitgeführte Gas aus der Flüssigkeit zu trennen. Der Gasabscheider ist somit außerhalb des Plattenstapels angeordnet, kann aber auch vorteilhafterweise in den Plattenstapel integriert sein.

Vorzugsweise ist der Gasabscheider unmittelbar an der Austrittsöffnung angeordnet. An diesem Ort besitzt die Flüssigkeit zumindest bei einem als Kondensator ausgelegten Plattenwärmetauscher die höchste Temperatur, so dass die Löslichkeit eines Gases darin am geringsten ist.

Bei einer bevorzugten Ausführungsform ist vorgesehen, dass der Gasabscheider eine Strömungsumlenkung, ein Hindernis und/oder eine Strömungsverzögerung aufweist. Derartige, die Strömung der Flüssigkeit mechanisch beeinflussenden Konstrukte, zweckmäßigerweise in einem Leitungs- oder Rohrabschnitt eingebaut, sind einfach einzusetzen und erlauben trotzdem eine effektive Gasabscheidung. Die Strömungsumlenkung bewirkt vorzugsweise eine Umlenkung um 180°, also eine Richtungsumkehr der Strömung. Insbesondere strömt die Flüssigkeit vor der Strömungsumlenkung geodätisch nach oben und nach der Strömungsumlenkung geodätisch nach unten. Hierbei beziehen sich die Begriffe geodätisch nach oben und geodätisch nach unten auf die betriebsgemäße Positionierung des Plattenwärmeübertragers.

In einer vorteilhaften Ausbildung ist ein Abscheideraum vorgesehen, in dem sich das aus der Flüssigkeit getrennte Gas sammelt. Der Abscheideraum befindet sich zweckmäßigerweise in einem geodätisch oberen Bereich des Gasabscheider. Bei dem Abscheideraum kann es sich insbesondere um einen Bereich der Leitung bzw. des Rohres handeln, innerhalb dessen die Flüssigkeit von der Austrittsöffnung des Plattenstapels wegfließt, vorzugsweise in Richtung eines Gebäudes und der in dem Gebäude eingebauten Heizungsgeräte.

Gemäß einer bevorzugten Ausbildung ist vorgesehen, dass am Abscheideraum des Gasabscheiders eine Entlüftungsöffnung mit einem automatisch wirkenden Ventil vorgesehen sein, welches bei Ausbildung einer genügend großen Gasblase die Entlüftungsöffnung freigibt. Hierzu eignet sich beispielsweise ein Schwimmerventil mit einem Schwimmer, beispielsweise eine Kunststoffkugel, der bei verringertem Flüssigkeitsstand nach unten sackt und die darüber liegende Entlüftungsöffnung freigibt. Bei ausreichend hohem Flüssigkeitspegel wird auch der Schwimmer nach oben gedrückt und dichtet das Ventil ab.

Vorzugsweise wird das abgeschiedene Gas in einen Außenbereich außerhalb eines Gebäudes geleitet. Wenn der Gasabscheider in dem Außenbereich angeordnet ist, kann dies einfach durch die Entlüftungsöffnung erfolgen. Wenn der Gasabscheider teilweise oder vollständig in dem Gebäude angeordnet ist, kann das abgeschiedene Gas über eine Rohrleitung nach außen geleitet werden.

Erfindungsgemäß ist ein Gassensor vorgesehen, welcher mit dem Gasabscheider verbunden ist. Gasabscheider und Gassensor sollten so ausgebildet und angeordnet sein, dass das abgeschiedene Gas an den Gassensor geleitet wird, beispielsweise indem es nach oben steigt und/oder von der Flüssigkeit in den Gasabscheider gedrückt wird. Der Gassensor sollte vorzugsweise ausgelegt sein, sensibel auf das als Kältemittel benutzte Gas zu reagieren. Wenn es sich bei dem Kältemittel um Propangas handelt, dann sollte der Gassensor ein Propansensor sein.

Vorzugsweise ist der Gassensor mit einem elektrischen Signalausgang ausgebildet. Das von dem Gassensor erzeugte Signal kann in beliebiger Weise zur Alarmauslösung und/oder zum Stoppen der Heizungs- oder Kühlanlage verwendet werden. Tritt aufgrund eines Lecks im Plattenwärmeübertrager Gas in das Heizungswasser ein, dann wird es beim Verlassen des Plattenwärmeübertragers mittels des Gassensors detektiert und eine Reaktion darauf kann ohne menschliches Zutun erfolgen.

Gemäß einem weiteren Aspekt der Erfindung ist eine Heizungs- oder Kühlanlage für ein Gebäude vorgesehen. Die Heizungs- oder Kühlanlage weist eine Wärmepumpe oder Kälteanlage mit mindestens einem Plattenwärmeübertrager gemäß einem der hierin beschriebenen Ausführungsbeispiele auf. Der Plattenwärmeübertrager ist ausgebildet, das Heizungswasser zu erwärmen. Die Heizungs- oder Kühlanlage weist weiterhin einen mit dem Plattenwärmeübertrager verbundenen Wasservorlauf auf, welcher ausgebildet ist, das Wasser von der Austrittsöffnung in das Gebäude zu leiten.

Je nachdem, ob es sich um eine Heizungs- oder Kühlanlage handelt, kann die Flüssigkeit, in diesem Fall das Wasser als Heizungswasser oder als Kühlwasser bezeichnet werden, welches über einen Warmwasserzulauf oder einen Kühlwasserzulauf in das Gebäude geleitet wird, um die Heizungsanlage oder die Kühlanlage zu versorgen.

Damit aus dem Gasabscheider entweichendes Gas nicht in das Gebäude gelangt, ist der Plattenwärmeübertrager, also der Plattenstapel und der Gasabscheider, vorzugsweise außerhalb des Gebäudes angeordnet.

Alternativ können der Plattenstapel und der Gasabscheider im Gebäude angeordnet sein. Hierbei ist dann eine Leitung vorgesehen, über welche das abgeschiedene Gas aus dem Gebäude geführt wird.

Gemäß einer weiteren Ausgestaltung ist die Heizungs- oder Kühlanlage reversibel einsetzbar. In diesem Fall wird der Plattenstapel als Kondensator und/oder als Verdampfer eingesetzt.

Der Gasabscheider gemäß einem der vorangehend oder nachfolgend beschriebenen Ausgestaltungen kann nach einem weiteren Aspekt der Erfindung auch nachträglich an Plattenwärmeübertrager angeordnet werden, also nachdem der Plattenwärmeübertrager bereits in der Heizungs- oder Kühlanlage eingebaut wurde. Eine derartige Nachrüstung kann dazu dienen, den Plattenwärmeübertrager nachträglich sicherer zu machen.

Vorteilhafterweise kann ein Gasabscheider, welche mit einem Gassensor ausgestattet ist, auch dazu verwendet werden, eine Dichtheitskontrolle an dem Plattenwärmeübertrager durchzuführen. Hierbei ist es dann auch unerheblich, ob die zweiten Strömungskanäle von dem Gas oder von einer weiteren Flüssigkeit durchströmt werden. Dem Gas oder der weiteren Flüssigkeit kann ein Testgas zugesetzt werden, auf das der Gassensor empfindlich ist. Wenn dieses Testgas aufgrund einer Undichtheit aus den zweiten Strömungskanälen in die ersten Strömungskanäle dringt, wird es aus der Flüssigkeit getrennt und durch den Gassensor detektiert.

Wenn die zweiten Strömungskanäle von dem Gas durchströmt werden, dann ist es vorteilhaft, wenn das Testgas und der Gassensor derart ausgewählt sind, dass der Gassensor das Testgas aber nicht das durchströmende Gas detektiert.

Die Erfindung wird im Folgenden anhand von Ausführungsbeispielen unter Bezugnahme auf die Figuren erläutert. Hierbei zeigen:
- Fig. 1: eine schematische Querschnittsansicht eines an einem Plattenstapel eines Plattenwärmeübertrager angeschlossenen Gasabscheiders gemäß einer ersten Ausführungsform;
- Fig. 2: eine schematische Querschnittsansicht eines an einem Plattenstapel eines Plattenwärmeübertrager angeschlossenen Gasabscheiders gemäß einer zweiten Ausführungsform; und
- Fig. 3: eine schematische Querschnittsansicht eines an einem Plattenstapel eines Plattenwärmeübertrager angeschlossenen Gasabscheiders gemäß einer dritten Ausführungsform.

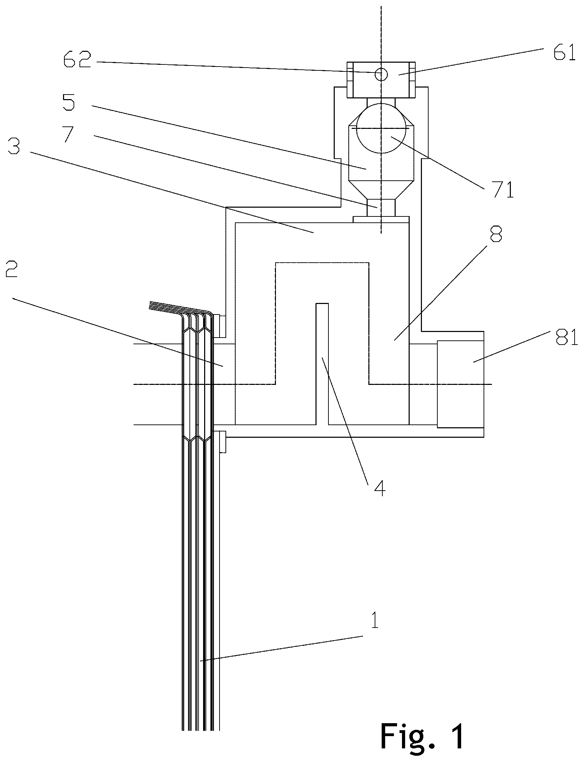

In der Fig. 1 wird ein Gasabscheider 3 dargestellt, welcher an einer Austrittsöffnung 2 eines Plattenstapels 1 angeschlossen ist. Der Plattenstapel 1, welches als Teil eines Plattenwärmeübertragers in einer Wärmepumpe oder Kälteanlage betrieben wird, weist erste Strömungskanäle für Heizungswasser und zweite Strömungskanäle für Propan auf, welches hier als Kältemittel eingesetzt wird. Das in dem Plattenstapel erwärmte Heizungswasser tritt aus der Austrittsöffnung 2 aus und durchströmt den Gasabscheider 3 von der Austrittsöffnung 2 bis zu einem Abscheiderausgang 8, wobei der Strömungsquerschnitt mindestens verdoppelt wird. Eine Wand in dem Gasabscheider 3 bildet ein Hindernis 4, welches hier als Strömungsumlenkung fungiert.

Sollte Propan in Form von Bläschen in dem Heizungswasser enthalten sein, insbesondere aufgrund eines Lecks innerhalb des Plattenstapels 1, dann bewirkt das Hindernis 4, dass das Propan aus dem Heizungswasser herausgedrängt wird, durch eine Entlüftungsöffnung 7 tritt und sich in einem Abscheideraum 5 oberhalb der Strömung sammelt. Direkt bzw. unmittelbar an der Austrittsöffnung 2 weist das Heizungswasser die höchste Temperatur auf, so dass das im Heizungswasser gelöste Propangas leichter abgeschieden wird, als wenn der Gasabscheider 3 entlang eines Leitungsrohres weiter stromabwärts von der Austrittsöffnung 2 angeordnet wäre.

Ein Schwimmerventil, beispielsweise ein Ventil in Form einer schwimmenden Kugel 71, sorgt dafür, dass kein Heizungswasser in den Hohlraum 61 eindringen kann. Wenn Propan durch die Entlüftungsöffnungen 7 tritt und sich in dem Abscheideraum 5 ansammelt, führt dies zu einem Absenken des Flüssigkeitspegels in dem Abscheideraum 5. Die auf dem Heizungswasser schwimmende Kugel 71 sinkt dann ebenfalls ab und gibt eine Öffnung zu dem Hohlraum 61 frei. Das Propan tritt dann in den Hohlraum 61 ein und kann von dort aus durch Gasaustrittslöcher 63 in Form von Bohrungen, entweichen.

Das so vom Propangas befreite Heizungswasser strömt dann durch den Abscheiderausgang 8 in eine Rohrleitung (nicht dargestellt), welche mittels eines Leitungsanschlusses 81 mit dem Abscheiderausgang 8 des Gasabscheiders 3 verbunden ist. Die Rohrleitung transportiert das Heizungswasser zu einem Heizungsgerät oder zu Heizungsgeräten, das/die sich in einem Gebäude befinden kann/können.

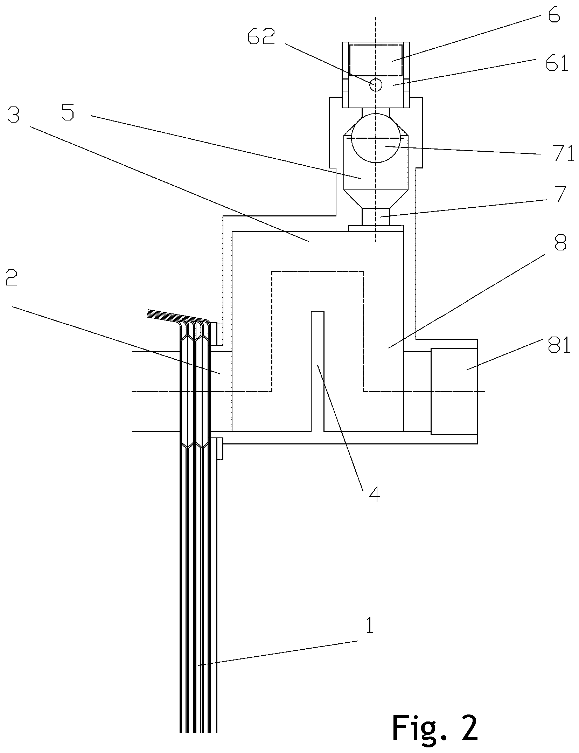

Eine alternative Ausgestaltung eines Gasabscheiders 3 ist in der Fig. 2 dargestellt. Diese unterscheidet sich dadurch von der Ausführungsform aus Fig. 1, dass in dem Hohlraum 61 ein Gassensor 6 angeordnet ist. Das abgeschiedene Propangas kann hierbei durch das Schwimmerventil 71 in den Hohlraum 61 des Gassensors 6 eindringen und von dem Gassensor 6, der als Propansensor ausgelegt ist, detektiert werden, bevor es durch die Gasaustrittslöcher 62 ins Freie entweicht. Der Gassensor 6 ist mit einem elektrischen Signalausgang ausgestattet. Das aufgrund der Erfassung des Propangases erzeugte Signal kann in beliebiger Weise zur Alarmauslösung oder zum Stoppen der Anlage verwendet werden.

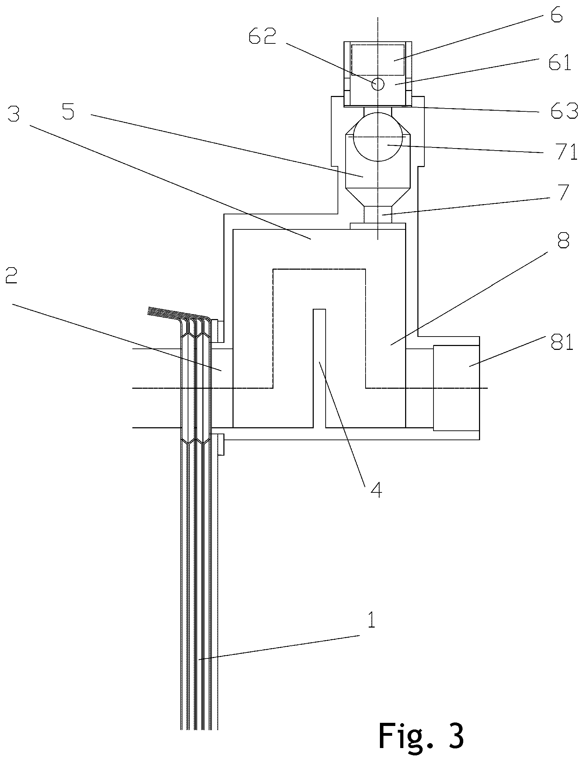

Schließlich wird in der Fig. 3 eine dritte mögliche Ausgestaltung des Gasabscheiders dargestellt. Sie unterscheidet sich von der Ausgestaltung gemäß Fig. 2 dadurch, dass zwischen dem Ventil 71 und dem Hohlraum 61 eine permeable Folie 63 angeordnet ist. Die permeable Folie 63 ist wasserundurchlässig und lässt nur das aus dem Heizungswasser abgeschiedene Gas hindurch in den Hohlraum 61. Damit wird verhindert, dass der empfindliche Gassensor 6 mit Wasser in Berührung kommen kann.

### Bezugszeichenliste:

- 1: Plattenstapel
- 2: Austrittsöffnung für Flüssigkeit
- 3: Gasabscheider
- 4: Strömungsumlenkung / Hindernis / Strömungsverzögerung
- 5: Abscheideraum
- 6: Gassensor
- 61: Hohlraum
- 62: Gasaustrittslöcher
- 63: Permeable Folie
- 7: Entlüftungsöffnung
- 71: PVDF-Kugel
- 8: Abscheiderausgang
- 81: Leitungsanschluss

## Patentansprüche

1. Plattenwärmeübertrager mit einem Plattenstapel (1) aus aufeinander gestapelten Wärmeübertragungsplatten, welche derart profiliert sind, dass zwischen ihnen erste Strömungskanäle für eine Flüssigkeit und zweite Strömungskanäle für ein Gas ausgebildet sind, wobei bei Betrieb zwischen der Flüssigkeit und dem Gas durch jeweilige Wärmeübertragungsplatten ein Wärmeaustausch stattfindet, wobei an einer Austrittsöffnung (2) des Plattenstapels (1) für Flüssigkeit ein Gasabscheider (3) angeordnet ist, welcher ausgebildet ist, das aufgrund eines Lecks innerhalb des Plattenwärmeübertragers von der Flüssigkeit mitgeführte Gas aus der Flüssigkeit zu trennen, wobei eine Flüssigkeitseintrittsöffnung derart vorgesehen ist, dass die Flüssigkeit durch die Flüssigkeitseintrittsöffnung in den Plattenstapel tritt und ihn durch die Austrittsöffnung verlässt, **gekennzeichnet durch** einen mit dem Gasabscheider (3) verbundenen Gassensor (6).

2. Plattenwärmeübertrager nach Anspruch 1, **dadurch gekennzeichnet, dass** der Gasabscheider (3) eine Strömungsumlenkung (4), ein Hindernis (4) und/oder eine Strömungsverzögerung (4) aufweist.

3. Plattenwärmeübertrager nach Anspruch 1 oder 2, **dadurch gekennzeichnet, dass** ein Abscheideraum (5) vorgesehen ist, in dem sich das aus der Flüssigkeit getrennte Gas sammelt.

4. Plattenwärmeübertrager nach Anspruch 3, **dadurch gekennzeichnet, dass** am Abscheideraum (5) des Gasabscheiders (3) eine Entlüftungsöffnung (7) vorgesehen ist.

5. Heizungs- oder Kühlanlage für ein Gebäude, aufweisend eine Wärmepumpe oder Kälteanlage mit mindestens einem Plattenwärmeübertrager nach einem der vorangehenden Ansprüche zum Erzwärmen von Wasser und einem mit dem Plattenwärmeübertrager verbundenen Wasserzulauf, welche ausgebildet ist, das Wasser von der Austrittsöffnung (2) in das Gebäude zu leiten.

6. Gebäude mit einer Heizungs- oder Kühlanlage nach Anspruch 6, **dadurch gekennzeichnet, dass** der Plattenstapel (1) und der Gasabscheider (3) ausgebildet sind, außerhalb des Gebäudes angeordnet zu sein.

7. Gebäude mit einer Heizungs- oder Kühlanlage nach Anspruch 6, **dadurch gekennzeichnet, dass** der Plattenstapel (1) und der Gasabscheider (3) ausgebildet sind im Gebäude angeordnet zu sein, wobei eine Leitung vorgesehen ist, über welcher das abgeschiedene Gas aus dem Gebäude geführt wird.

8. Heizungs- oder Kühlanlage oder Gebäude nach einem der Ansprüche 5 bis 7, **gekennzeichnet durch** eine reversible Einsetzbarkeit, wobei der Plattenstapel (1) als Kondensator und/oder als Verdampfer eingesetzt ist.

9. Gebäude mit einer Heizungs- oder Kühlanlage nach einem der Ansprüche 6 bis 9, mit einem Plattenwärmeübertrager nach Anspruch 3, **dadurch gekennzeichnet, dass** der Abscheideraum (5) in einem geodätisch oberen Bereich des Gasabscheider (3) angeordnet ist.

10. Verfahren, aufweisend folgende Verfahrensschritte:
- Bereitstellen eines Plattenwärmeübertragers mit einem Plattenstapel (1) aus aufeinander gestapelten Wärmeübertragungsplatten, welche derart profiliert sind, dass zwischen ihnen erste Strömungskanäle für eine Flüssigkeit und zweite Strömungskanäle für ein Gas oder für eine weitere Flüssigkeit ausgebildet sind, wobei bei Betrieb zwischen der Flüssigkeit und dem Gas oder zwischen der Flüssigkeit und der weiteren Flüssigkeit durch jeweilige Wärmeübertragungsplatten ein Wärmeaustausch stattfindet, wobei eine Flüssigkeitseintrittsöffnung derart vorgesehen ist, dass die Flüssigkeit durch die Flüssigkeitseintrittsöffnung in den Plattenstapel tritt und ihn durch die Austrittsöffnung verlässt,
- Anordnen eines Gasabscheiders (3) mit einem mit dem Gasabscheider (3) verbundenen Gassensor (6) an einer Austrittsöffnung (2) des Plattenstapels (1) für die Flüssigkeit, wobei der Gasabscheider (3) ausgebildet ist, aufgrund eines Lecks innerhalb des Plattenwärmeübertragers von der Flüssigkeit mitgeführtes Gas aus der Flüssigkeit zu trennen.

11. Verfahren nach Anspruch 10, **dadurch gekennzeichnet, dass** der Gasabscheider mit einem Gassensor verbunden ist, wobei in die zweiten Strömungskanäle ein Testgas eingeführt wird, für welches der Gassensor empfindlich ist, und wobei eine Detektion des Testgases durch den Gassensor als Indiz dafür genommen wird, dass der Plattenwärmeübertrager eine Undichtheit aufweist.

## Claims

1. A plate heat exchanger having a plate stack (1) of heat transfer plates stacked on top of each other, which are profiled in such a way that first flow channels for a liquid and second flow channels for a gas are formed between them, wherein during operation between the liquid and the gas a heat exchange takes place through respective heat transfer plates, wherein a gas separator (3) is arranged at an outlet opening (2) of the plate stack (1) for liquid, which is designed to separate the gas carried by the liquid due to a leak within the plate heat exchanger from the liquid, wherein a liquid inlet opening is provided in such a way that the liquid enters the plate stack through the liquid inlet opening and exits it through the outlet opening, **characterized by** a gas sensor (6) connected to the gas separator (3).

2. The plate heat exchanger according to claim 1, **characterized in that** the gas separator (3) has a flow deflection (4), an obstacle (4) and/or a flow delay (4).

3. The plate heat exchanger according to claim 1 or 2, **characterized in that** a separation chamber (5) is provided in which the gas separated from the liquid collects.

4. The plate heat exchanger according to claim 3, **characterized in that** a vent opening (7) is provided at the separation chamber (5) of the gas separator (3).

5. A heating or cooling system for a building comprising a heat pump or cooling system having at least one plate heat exchanger in according to any one of preceding claims for heating of water and a water inlet connected to the plate heat exchanger, which is designed to conduct the water from the outlet opening (2) into the building.

6. A building having a heating or cooling system according to claim 6, **characterized in that** the plate stack (1) and the gas separator (3) are designed to be arranged outside the building.

7. A building having a heating or cooling system according to claim 6, **characterized in that** the plate stack (1) and the gas separator (3) are designed to be arranged in the building, wherein a line is provided by which the separated gas is led out of the building.

8. A heating or cooling system or building according to any one of claims 5 to 7, **characterized by** reversible usability, wherein the plate stack (1) is used as a condenser and/or as an evaporator.

9. A building having a heating or cooling system according to any one of claims 6 to 9, having a plate heat exchanger according to claim 3, **characterized in that** the separation chamber (5) is arranged in a geodetic upper area of the gas separator (3).

10. A method, comprising following method steps:
- providing a plate heat exchanger having a plate stack (1) of heat transfer plates stacked on top of each other, which are profiled in such a way that the first flow channels for a liquid and second flow channels for a gas or for another liquid are formed between them, wherein a heat exchange takes place between the liquid and the gas or between the liquid and the further liquid through respective heat transfer plates during operation, wherein a liquid inlet opening is provided in such a way that the liquid enters the plate stack through the liquid inlet opening and exits it through the outlet opening,
- arranging a gas separator (3) having a gas sensor (6) connected to the gas separator (3) at an outlet opening (2) of the plate stack (1) for the liquid, wherein the gas separator (3) is designed to separate gas carried by the liquid due to a leak within the plate heat exchanger from the liquid.

11. The method according to claim 10, **characterized in that** the gas separator is connected to a gas sensor, wherein a test gas to which the gas sensor is sensitive is introduced into the second flow channels, and wherein a detection of the test gas by the gas sensor is taken as an indication that the plate heat exchanger has a leakiness.

## Revendications

1. Un échangeur de chaleur à plaques avec une pile de plaques (1) de plaques de transfert de chaleur empilées les unes sur les autres, qui sont profilées de manière à former entre elles des premiers canaux d'écoulement pour un liquide et des seconds canaux d'écoulement pour un gaz, dans lequel lors de l'opération un échange de chaleur a lieu entre le liquide et le gaz à travers les plaques de transfert de chaleur respectives, dans lequel un séparateur de gaz (3) est disposé à une ouverture de sortie (2) de la pile de plaques (1) pour le liquide, qui est conçu pour séparer le gaz transporté par le liquide en raison d'une fuite à l'intérieur de l'échangeur de chaleur à plaques du liquide, dans lequel une ouverture d'entrée du liquide est fournie de manière à ce que le liquide entre dans la pile de plaques par l'ouverture d'entrée du liquide et en sorte par l'ouverture de sortie, **caractérisé par** un capteur de gaz (6) relié au séparateur de gaz (3).

2. L'échangeur de chaleur à plaques selon la revendication 1, **caractérisé en ce que** le séparateur de gaz (3) présente une déviation de l'écoulement (4), un obstacle (4) et/ou un délai d'écoulement (4).

3. L'échangeur de chaleur à plaques selon la revendication 1 ou 2, **caractérisé en ce qu'**une chambre de séparation (5) est fournie dans laquelle le gaz séparé du liquide se recueille.

4. L'échangeur de chaleur à plaques selon la revendication 3, **caractérisé en ce qu'**une ouverture de ventilation (7) est prévue dans la chambre de séparation (5) du séparateur de gaz (3).

5. Un système de chauffage ou de refroidissement pour un bâtiment comprenant une pompe à chaleur ou un système de réfrigération comprenant au moins un échangeur de chaleur à plaques selon l'une des revendications précédentes pour le chauffage d'eau, et une entrée d'eau reliée à l'échangeur de chaleur à plaques, qui est conçue pour conduire l'eau de l'ouverture de sortie (2) vers le bâtiment.

6. Un bâtiment comprenant un système de chauffage ou de refroidissement selon la revendication 6, **caractérisé en ce que** la pile de plaques (1) et le séparateur de gaz (3) sont conçus pour être disposés à l'extérieur du bâtiment.

7. Le bâtiment comprenant un système de chauffage ou de refroidissement selon la revendication 6, **caractérisé en ce que** la pile de plaques (1) et le séparateur de gaz (3) sont conçus pour être disposés dans le bâtiment, dans lequel une conduite est fournie par laquelle le gaz séparé est conduit hors du bâtiment.

8. Le système de chauffage ou de refroidissement ou le bâtiment selon l'une des revendications 5 à 7, **caractérisé par** une utilisabilité réversible, dans lequel la pile de plaques (1) est utilisée comme condenseur et/ou évaporateur.

9. Le bâtiment comprenant un système de chauffage ou de refroidissement selon l'une des revendications 6 à 9, comprenant un échangeur de chaleur à plaque selon la revendication 3, **caractérisé en ce que** la chambre de séparation (5) est située dans une zone géodésique supérieure du séparateur de gaz (3).

10. Un procédé, comprenant des étapes du procédé suivantes :
- fournir un échangeur de chaleur à plaques comprenant une pile de plaques (1) de plaques de transfert de chaleur empilées les unes sur les autres, qui sont profilées de manière à ce que des premiers canaux d'écoulement pour un liquide et des seconds canaux pour un gaz ou un autre liquide se forment entre eux, dans lequel lors de l'opération un échange de chaleur a lieu entre le liquide et le gaz ou entre le liquide et l'autre liquide à travers des plaques de transfert de chaleur respectives, dans lequel une ouverture d'entrée du liquide est fournie de manière à ce que le liquide entre dans la pile de plaques par l'ouverture d'entrée du liquide et en sorte par l'ouverture de sortie,
- disposer un séparateur de gaz (3) avec un capteur de gaz (6) connecté au séparateur de gaz (3) à une ouverture de sortie (2) de la pile de plaques (1) pour le liquide, dans lequel le séparateur de gaz (3) est conçu pour séparer le gaz transporté par le liquide en raison d'une fuite à l'intérieur de l'échangeur de chaleur à plaques du liquide.

11. Un procédé selon la revendication 10, **caractérisée en ce que** le séparateur de gaz est connecté à un capteur de gaz, dans lequel dans les seconds canaux d'écoulement un gaz d'essai est introduit auquel le capteur de gaz est sensible, et dans lequel la détection du gaz d'essai par le capteur de gaz est prise comme une indication que l'échangeur de chaleur à plaques présente un défaut d'étanchéité.
